# EUROPEAN PATENT SPECIFICATION

(11) **EP 2 891 555 B1**
(45) Date of publication and mention of the grant of the patent: **29.07.2020**
(21) Application number: 14199429.3
(22) Date of filing: 19.12.2014
(51) Int. Cl.: B32B 27/20, E04F 15/10, B32B 27/22, E04F 15/18

(54) **HYBRID FLOORING PRODUCTS**
HYBRIDE FUSSBODENPRODUKTE
PRODUITS POUR SOL HYBRIDE

(30) Priority: 31.12.2013 US 201361922650 P
(43) Date of publication of application: 08.07.2015
(73) Proprietor: Armstrong World Industries, Inc., Lancaster, Pennsylvania 17603 (US)
(72) Inventor: Davies, Mary Kate, Stevens, Pennsylvania 17578 (US); Ramachandra, Sunil, Lancaster, Pennsylvania 17601 (US)
(74) Representative: Jenkins, Peter David

(56) References cited:
- WO-A1-2013/155534
- US-A1- 2005 016 107
- US-A1- 2008 081 875
- US-A1- 2009 111 915
- US-A1- 2012 231 256
- US-A1- 2012 291 387
- US-A1- 2013 079 439
- US-B1- 6 933 043

## Description

### Cross-Reference to Related Patent Applications

This application claims the benefit of priority from U.S. Provisional Patent Application Serial No. 61/922,650, filed December 31, 2013.

### Background

Solid hardwood floor systems are known for their quality since the richness of hardwood can add remarkable charm to any room. While desirable for aesthetic reasons, hardwood floors react to environmental conditions; and thus, they need to account for changes in ambient temperature.

In recent years, alternative flooring systems using wood-plastic composites (WPCs) have been developed to replace natural wood in flooring systems. WPCs have grown increasingly popular because these alternative flooring systems may improve moisture related dimensional stability issues associated with solid wood floors. However, known WPCs have limitations stemming from temperature related dimensional stability.

There is, therefore, a need for WPC products that exhibit increased dimensional stability under a variety of temperatures and moisture conditions. Embodiments of the present invention are directed to these and other ends.

US-B-6,933,043 discloses a decorative floor covering comprising a polyethylene terephthalate film layer in the surface layer, and a method of manufacturing the same. Other flooring systems are described in US-A1-2012/231256, US-A1-2013/079439 and WO-A1-2013/155534.

### Summary

The present invention provides flooring systems according to claim 1 and claim 14. Preferred features are defined in the dependent claims.

Also described is a flooring composition comprising: a vinyl surface; a core; and a cork underlayment; wherein the core comprises a binder comprising a polymer component having at least a first polymer comprising PVC and a second polymer comprising a homo-polymer, a co-polymer, a polymer blend, or a combination thereof.

Also described are methods of improving the thermal stability of a WPC flooring system comprising preparing a core comprising a binder and filler; wherein the binder and filler are present in a weight ratio of from about 1:1 to about 1:3.

### Detailed Description

The present invention provides a flooring system having multiple layers comprising a substrate and an underlayment. In some embodiments, the substrate and underlayment each have a top and a bottom surface. In some embodiments, the bottom surface of the underlayment is positioned adjacent to a subfloor, and the top surface of the underlayment is positioned adjacent to the bottom surface of the substrate. The underlayment is positioned between the substrate and the subfloor after installation of the flooring system.

The substrate comprises a core comprising a binder and a filler. The binder and the filler are present in a weight ratio of 1:1 to 1:3. In some embodiments, the binder and the filler are present in a weight ratio of about 1:1 to about 1:2.

In some embodiments, the core comprises 20 wt.% to 40 wt.% of the binder. In some embodiments, the core comprises about 25 wt.% to about 35 wt.% of a binder. In some embodiments the core comprises about 32 wt.% of a binder.

In some embodiments, the binder comprises a polymer that is amorphous or crystalline or semi-crystalline in nature. As used herein, the "glass transition temperature" or T_{g} of any polymer may be calculated as described by Fox in Bull. Amer. Physics. Soc., 1, 3, page 123 (1956). The T_{g} can also be measured experimentally using differential scanning calorimetry (rate of heating 20° C. per minute, T_{g} taken at the midpoint of the inflection or peak). Unless otherwise indicated, the stated T_{g} as used herein refers to the calculated T_{g}. In the present invention, the polymer component has a T_{g} between 32°C (90°F) and 66°C (150°F), alternatively 38°C (100°F) and 66°C (150°F), alternatively 32°C (90°F) and 60°C (140°F). In some embodiments, the binder has a T_{g} between 32°C (90°F) and 66°C (150°F), alternatively 38°C (100°F) and 66°C (150°F), alternatively 32°C (90°F) and 60°C (140°F).

The polymer is selected from a vinyl polymer, a polyolefin, an aromatic or aliphatic polyester, an acrylic polymer, an inorganic polymer or a combination of two or more thereof. Specifically, the polymer may include a vinyl chloride homo-polymer (e.g. PVC), a co-polymer or a terpolymer of vinyl chloride, acrylo-butadiene styrene, polypropylene, polyethylene, a polyester, polyethylene terephthalate, polypropylene terephthalate, polybutylene terephthalate, an acrylate and a combination of two or more thereof.

Co-polymers and terpolymers of vinyl chloride may include block copolymers, terpolymers, or the like, and include comonomers of vinyl halides such as vinyl bromide and vinyl fluoride; vinyl esters such as vinyl acetate, vinyl chloroacetate, vinyl butyrate, other fatty acid vinyl esters, vinyl alkyl sulfonates and the like; vinyl ethers, such as vinyl ethylether, vinyl isopropyl ether, vinyl chloroethyl ether and the like; a cyclic unsaturated compound such as styrene, a mono- or poly-chloro styrenes, coumarone, indene, a vinyl naphthalenes, a vinyl pyridines, vinyl pyrrole and the like; acrylic acid and its derivatives such as ethyl acrylate, methyl methacrylate, ethyl methacrylate, ethyl chloroacrylate, acrylonitrile, methacrylonitrile, diethylmaleate, diethyl fumarate and the like; a vinylidene compound, such as vinylidene chloride, vinylidene bromide, vinylidene fluorochloride and the like; an unsaturated hydrocarbon such as ethylene, propylene, isobutene and the like; an allyl compound, such as allyl acetate, allyl chloride, allyl ethylether and the like; or a conjugated or cross-conjugated ethlynically unsaturated compound such as butadiene, isoprene, chloroprene, 2,3,dimethylbutadiene-1,3-piperylene, divinyl ketone and the like.

The polymer may also be a biobased polymer, such as linseed oil or a polyester such based on 1,3-propanediol, 1,4-butanediol, glycerin, sebacic acid, succinic acid, adipic acid, azelaic acid, citric acid, and terephthalic acid. In some embodiments the biobased polymer can be combined with other polymers.

In some embodiments, the core may comprise 10 wt.% to 40 wt.% of a polymer component. In some embodiments, the core may comprise about 15 wt.% to about 35 wt.% of a polymer component. In some embodiments, the core may comprise about 20 wt.% to about 25 wt.% of a polymer component. In some embodiments, the core may comprise about 23 wt.% of a polymer component.

In some embodiments, the polymer component further comprises a thermosetting material. In some embodiments, the core may comprise from about 0.01 wt.% to about 15 wt.% of a thermosetting material. In some embodiments, the thermosetting material is selected from a polyurethane, a polyethylene, a polystyrene, and a natural or synthetic rubber. In some embodiments the thermosetting material adds strength and/or processability to the core.

In some embodiments, the polymer component comprises a blend of PVC and one more polymers described herein. In some embodiments, PVC and the second polymer are present in a weight ratio of about 1:10 to about 10:1; alternatively about 1:9 to about 9:1; alternatively about 1:8 to about 8:1; alternatively about 1:7 to about 7:1; alternatively about 1:6 to about 6:1; alternatively about 1:5 to about 5:1; alternatively about 1:4 to about 4:1; alternatively about 1:3 to about 3:1, alternatively about 1:2 to about 2:1; and alternatively about 1:1.

In some embodiments, the binder further comprises a plasticizer. In some embodiments, the plasticizer is a carboxylic acid ester such as an alkyl benzyl phthalate, a dialkyl phthalate, an alkyl benzoate, etc. In some embodiments, the plasticizer is selected from butyl benzene phthalate, diisononyl phthalate, dioctyl terephthalate, dibutyl phthalate, dibutoxy ethyl phthalate, butyl octyl phthalate, dihexyl phthalate, dioctyl phthalate, diisooctyl phthalate, dicapryl phthalate, dicapryldioctyl phthalate, diisodecyl phthalate, ditridecyl phthalate, diisononyl cyclohexane, a benzoate, and a combination of two or more thereof.

The core comprises from 1 wt.% to 12 wt.% of a plasticizer. In some embodiments, the core comprises from about 1 wt.% to about 10 wt.% of a plasticizer. In some embodiments, the core comprises 8.5 wt.% of a plasticizer. In some embodiments, the core comprises about 9 wt.% of a plasticizer.

The core also comprises a filler comprising a material selected from limestone, clay, talc, or a combination thereof. In some embodiments, the filler further comprises a material selected from a lignocellulostic component, bamboo, and a combination of two or more thereof. Some embodiments provide a lignocellulostic component selected from cork, oak, hardwood, eucalyptus, acacia, birch, palm wood, rubber wood, mulberry wood, Forrest Stewardhip Council certified wood species, coir, jute, seagrass, straw, and a combination of two or more thereof. In some embodiments, the core may comprise alternating layers of bamboo and cork.

In some embodiments of the present invention, the filler comprises at least two different types of fillers. In some embodiments, the first filler is selected from limestone, clay, and talc. In some embodiments, the second filler is a lignocellulostic material. In some embodiments, the first filler and second filler may be present in a weight ratio of about 1:10 to about 10:1; alternatively about 1:9 to about 9:1; alternatively about 1:8 to about 8:1; alternatively about 1:7 to about 7:1; alternatively about 1:6 to about 6:1; alternatively about 1:5 to about 5:1; alternatively about 1:4 to about 4:1; alternatively about 1:3 to about 3:1, alternatively about 1:2 to about 2:1; and alternatively about 1:1.

In some embodiments of the present invention, the core comprises from 60 wt.% to 80 wt.% of filler. In some embodiments, the core comprises from about 65 wt.% to about 75 wt.% of filler. In some embodiments, the core comprises about 68 wt.% of filler.

In some embodiments, the binder comprises a vinyl chloride homo-polymer, a second polymer, and a plasticizer, and the filler comprises limestone and a lignocellulostic component. In some embodiments, the core preferably comprising from about 25 wt.% to about 35 wt.% of a binder and about from 65 wt.% to about 75 wt.% of a filler.

In some embodiments, the core further comprises an additional component selected from an additive, a stabilizer, a UV additive, a lubricant, a compatibilizer, and a combination of two or more thereof. Heat stabilizers such as tin, lead, barium, cadmium, and zinc may be utilized by some embodiments of the present invention. Internal and external lubricants utilized in the plastics industry may be used to aid in the processing of the core. Examples of lubricants include: calcium stearate, esters, paraffin wax, and amide wax. Additionally, foaming agents and compatibilizers may also be utilized by the present invention.

In some embodiments, the core comprises from about 0 wt.% to about 10 wt.% of an additional component. In some embodiments, the core comprises from about 0.01 wt.% to 8 wt.% of an additional component. In some embodiments, the core comprises 0.1 wt.% to about 5 wt.% of an additional component. In some embodiments, the core comprises about 1 wt.% to about 3 wt.% of an additional component.

In some embodiments, the core of the present invention has a thickness of from 2 mm to 15 mm. In some embodiments the core has a thickness of from about 2 mm to about 12 mm. In some embodiments the core has a thickness of from about 3 mm to about 10 mm. In some embodiments the core has a thickness of from about 4 mm to about 9 mm. In some embodiments the core has a thickness of about 5 mm.

In some embodiments, the substrate may further comprise a melamine impregnated paper layer. In some embodiments, the substrate may further comprise a vinyl layer that contains no filler and is positioned adjacent to the top surface of the core. Some embodiments provide a vinyl layer comprising virgin or recycled vinyl, wherein the vinyl is selected from polyvinyl chloride, polyvinyl acetate, polystyrene, polyvinyl alcohol, and polyacryloniturile. In some embodiments, the vinyl layer has a thickness of from about 0.5 mm to about 5 mm, alternatively about 1 mm to about 3 mm, and alternatively about 1.5 mm.

In some embodiments, the substrate may be coated with a wear layer. In some embodiments, the wear layer comprises a resin and wear resistant particles, wherein the resin may be a UV curable resin. In some embodiments, the wear layer has a thickness of from about 0.5 mm to about 3 mm, alternatively about 1 mm to about 2 mm, and alternatively about 1.5 mm.

In some embodiments, 1, 2, 3, 4, 5, 6, 7, 8, 9, or 10 separate coatings may be applied to a surface of the substrate.

In some embodiments, the wear layer comprises an acrylate component. Some embodiments provide a wear layer comprising from about 70 wt. % to about 82 wt. %, of the acrylate component. In some embodiments, the wear layer comprises from about 75 wt. % to 80 wt. %, of the acrylate component.

Some embodiments provide an acrylate component comprising a polyester acrylate, a urethane acrylate, an unsaturated aliphatic urethane acrylate, an epoxy acrylate, a silicone acrylate, a hydrophobic urethane acrylate, hydrophobic acrylate ester, an aliphatic silicone acrylate, a hydrophobic acrylate ester, an amine synergist or a combination of two or more thereof. In some embodiments, the acrylate component comprises an acrylate resin such as aliphatic urethane acrylate oligomer, aliphatic urethane acrylate, ethoxylated bisphenol A dimethacrylate, acrylic block copolymer, neopentyl glycol propoxylated diacrylate, trimethylolpropane ethoxylated triacrylate, or a polyester acrylate formed according to the procedure of Example 7 of U.S. Patent No. 5,891,582, which is hereby incorporated herein in its entirety. Some embodiments provide that the degree of oligomerization for the ethoxylated bisphenol A dimethacrylate ranges from about 2 to about 4 per hydroxyl group on the bisphenol A compound. Some embodiments provide that the degree of oligomerization for the propoxylated diacrylate ranges from about 2 to 4 per hydroxyl group on the neopentyl glycol compound.

In some embodiments, the UV curable resin includes both a monomer and an oligomer. In some embodiments, the wear layer comprises from about 60 wt.% to about 90 wt.% of a UV curable resin. Some embodiments provide a wear layer comprising from about 75 wt.% to about 85 wt.% of the curable resin. In some embodiments, the wear layer comprises from about 5 wt. % to about 70 wt. % of a monomer. In some embodiments, the wear layer comprises from about 30 wt. % to about 45 wt. % of a monomer. In some embodiments, the wear layer comprises from about 5 wt. % to about 70 wt. % of an oligomer. Some embodiments provide a wear layer comprising from about 35 wt. % to about 45 wt. % of an oligomer.

In some embodiments, the oligomer is selected from ethoxylated bisphenol A dimethacrylate, neopentyl glycol propoxylated diacrylate, and trimethylolpropane ethoxylated triacrylate. Some embodiments provide that the degree of oligomerization for the ethoxylated bisphenol A dimethacrylate ranges from about 2 to about 4 per hydroxyl group on the bisphenol A compound. Some embodiments provide that the degree of oligomerization for the propoxylated diacrylate ranges from about 2 to 4 per hydroxyl group on the neopentyl glycol compound.

In some embodiments, the use of a monomer reduces the viscosity of the wear layer prior to curing and can facilitate the manufacturing and coating process. In some embodiments, the monomer is selected from an acrylate, cyclohexane dimethanol diacrylate, tricyclodecane dimethanol diacrylate, tricyclodecane dimethanol dimethacrylate, isobornyl acrylate, trimethylolpropane ethoxylated triacrylate, cyclic trimethylolpropane formal acrylate, a cyclic trimethylolpropane triacrylate, 2-phenoxyethyl acrylate, dipropylene glycol diacrylate, a silicone acrylate, and a combination of two or more thereof.

In some embodiments, at least a portion of the acrylate component comprises one or more silicone acrylates. Some embodiments provide a wear layer comprising from about 1 wt. % to about 30 wt. % of a silicone acrylate. In some embodiments, the wear layer comprises from about 2 wt. % to about 10 wt. % of a silicone acrylate. In some embodiments, the wear layer comprises from about 3 wt. % to about 7 wt. % of a silicon acrylate.

Other embodiments provide a wear layer further comprising a lubricant. In some embodiments, the wear layer comprises from about 1 wt. % to about 10 wt. % of a lubricant. In some embodiments, the lubricant is a wax lubricant. In some embodiments, the wear layer comprises from about 2 wt. % to about 10 wt. % of a wax lubricant. In some embodiments, the wear layer comprises from about 5 wt. % to about 9 wt. % of a wax lubricant. In some embodiments, the wear layer comprises from about 6 wt. % to about 8 wt. % of a wax lubricant. In some embodiments, the wear layer comprises from about 7 wt. % to about 8 wt. % of a wax lubricant. In some embodiments, the wear layer comprises about 7.5 wt. % of a wax lubricant

Some embodiments provide a wear layer comprising a silicone acrylate in the amount of from about 2 wt. % to about 10 wt. %; and a lubricant in an amount of from about 2 wt. % to about 10 wt. %. Some embodiments provide a wear layer comprising a silicone acrylate in the amount of from about 3 wt. % to about 7 wt. %; and a lubricant in an amount of from about 5 wt. % to about 9 wt. %. Some embodiments provide a wear layer comprising a silicone acrylate in the amount of from about 3 wt. % to about 7 wt. %; and a lubricant in an amount of from about 6 wt. % to about 8 wt. %.

In some embodiments, the wear layer may include a photoinitiator. In some embodiments, the photoinitiator absorbs only in the UV range of the electromagnetic spectrum. In some embodiments, the photoinitiator absorbs outside of the UV range of the electromagnetic spectrum. As such, some embodiments provide a photoinitiator that absorbs radiation at wavelengths lying outside, or shorter than, the visible light spectrum, generally less than about 420 nm. In some embodiments, the photoinitiator responds to such UV radiation to initiate and induce curing of the curable resin component. In some embodiments, a wear layer may comprise from about 1 wt. % to about 15 wt. % of a photoinitiator; alternatively from about 2 wt. % to about 6 wt. % of a photoinitiator.

In some embodiments, the photoinitiator is free radical photoinitiator. In some embodiments, the free radical photoinitiator is selected from diphenyl ketone, 1-hydroxycyclohexyl phenyl ketone, phenyl bis (2,4,6-trimethyl benzoyl)phosphine oxide, 2,4,6-trimethylbenzoyldiphenyl phosphine oxide, isopropylthioxanthone, 1-chloro-4-propoxy-thioxanthone, 2,4-diethylthioxanthone, 2-chlorothioxanthone, camphorquinone, 2-ethyl anthraquinone, 1-hydro-xyclohexyl phenyl ketone, and a combination of two or more thereof.

In some embodiments, the photoinitiator may be a benzophenone (such as, but not limited to, diphenyl ketone) or substituted benzophenone, such as, for example, an alpha-hydroxyketone. In some embodiments, the alpha-hydroxyketone is 1-hydroxy-cyclohexyl-phenyl-ketone.

In some embodiments, an abrasive may be present in the wear layer. Some embodiments comprise an abrasive selected from: aluminum oxide, fluorite, apatite, feldspar, nepheline syenite, glass, quartz, ceramic, silicon nitride, silicon carbide (carborundum), tungsten carbide, titanium carbide, topaz, corundum/ sapphire (Al₂O₃), diamond, and a combination of two or more thereof. In some embodiments, the wear layer comprises from about 1 wt. % to about 20 wt. % of an abrasive. Optionally, the wear layer may comprise from about 1% to about 10 wt. % of an abrasive. Further optionally, the wear layer may comprise from about 1 wt. % to about 6 wt. % of an abrasive.

In some embodiments, the wear layer may also comprise an amine synergist. In some embodiments, the wear layer may comprise from about 1 wt. % to about 15 wt. % of an amine synergist. In some embodiments, the wear layer may comprise from about 2 wt. % to about 6 wt. % of an amine synergist. In some embodiments, the wear layer may comprise from about 2 wt. % to about 3 wt. %, of an amine synergist. In some embodiments, the wear layer may comprise about 2.5 wt. % of an amine synergist. Suitable amine synergists include, but are not limited to, 2-ethylhexyl-4-dimethylamino benzoate, ethyl 4-(dimethylamine) benzoate, N-methyl diethanolamine, 2-dimethylamino ethylbenzoate, butoxyethyl-4-dimethylamino benzoate, and a combination of two or more thereof.

In some embodiments, the wear layer comprises: an acrylate component; a photoinitiator; an amine synergist, and an abrasive. In some embodiments the wear layer comprises from about 65 wt. % to about 85 wt. % of an acrylate component; from about 0.1 wt. % to about 5 wt. % of a photoinitiator; from about 0.1 wt. % to about 5 wt. % of an amine synergist; and from about 1 wt. % to about 15 wt. % of an abrasive based on the total weight of the wear layer. Additional embodiments provide a wear layer comprising from about 2 wt.% to about 3.5 wt.% of a photoinitiator.

Other embodiments provide a wear layer that further comprises a flattening agent. In some embodiments, the wear layer comprises from about 0.1 wt. % to about 3 wt. % of a flattening agent. In some embodiments, an inorganic flattening agent may be used, e.g. silica. In some embodiments, an organic flattening agent or a combination of inorganic and organic flattening agents may be used. In those embodiments wherein a plurality of flattening agents is employed, the flattening agents may differ by chemistry (i.e., composition), particle size, particle size distribution, surface treatment, surface area and/or porosity.

In some embodiments, the wear layer further comprises a surfactant. In some embodiments, the wear layer comprises from about 0.1 wt. % to about 1 wt. % of a surfactant.

Also described is a method of improving the heel scuff resistance of a flooring product comprising applying to a major surface of a substrate, any one of the wear layers described herein; and exposing the coated substrate to at least one radiation source. Other embodiments of the present invention provide a method of improving the scratch resistance of a flooring product comprising applying to the major surface of a substrate, any one of the wear layers described herein; and exposing the coated substrate to at least one radiation source.

Also described is a method of reducing the extent to which dirt is attracted to a surface of a flooring product comprising applying to the major surface of a substrate, any one of the wear layers described herein; and exposing the coated substrate to at least one radiation source. Still further embodiments provide a method of improving the cleanability of a surface of a flooring product comprising applying to the major surface of a substrate, any one of the wear layers described herein; and exposing the coated substrate to at least one radiation source.

Also described is a method of reducing the water-based staining of a flooring product comprising applying to the major surface of a substrate, any one of the wear layers described herein; and exposing the coated substrate to at least one radiation source.

Also described is a method of reducing emission of volatile organic compounds from a substrate coated with any one of the coatings described herein, comprising: applying to the major surface of the substrate, any one of the wear layers described herein; and exposing the coated substrate to at least one radiation source.

In some embodiments, the wear layer coated substrates provide a water contact angle of from about 85 degrees to about 120 degrees. In some embodiments, the wear layer coated substrates provide a surface energy of from about 6 to about 21 dyne/cm.

In some embodiments, the wear layer is applied to the substrate in an amount sufficient to provide a wet thickness of from about 0.01 to 0.05 mm (0.5 to 2 mils). In some embodiments, the wear layer is applied to the substrate in an amount sufficient to provide a wet thickness of about 0.03 mm (1 mil).

In some embodiments, the wear layer coated substrate is exposed to a plurality of radiation sources. In some embodiments, the radiation source is selected from infrared radiation and ultraviolet radiation. In some embodiments, the ultraviolet radiation source is selected from a UVA radiation source; a UVB radiation source; a UVC radiation source; and combination of two or more thereof.

Some embodiments provide UV curable compositions for use as protective coatings on substrates, such as flooring may be created as either a solvent base or waterborne formulations that include a resin and a photoinitiator.

In some embodiments, the wear layer comprises a curable resin, a photoinitiator, a matting agent/wax, an abrasive, and a dispersing agent. In some embodiments, the wear layer further comprises an antimicrobial agent. In some embodiments, the curable resin comprises an acrylate component.

In some embodiments, the wear layer may include at least one polymer matting agent. In some embodiments, when the wear layer is cured, the polymer matting agent is a solid which is provided in the coating to provide a polishing benefit. In some embodiments, the polymer matting agent allows the floor to be dry buffed to restore the floor to its initial appearance. In some embodiments, this allows the floor to be polished without the need for additional chemicals or polishes to be added.

Suitable polymer matting agents include, but are not limited to: polytetrafluoroethylene, polyethylene, polypropylene, modified polyethylene, wax polymers, hydrocarbon, biodegradable polymer based on renewable resources, natural waxes (such as, but not limited to, carnauba wax, montan wax, paraffin wax) or combinations thereof.

In some embodiments, the terms "lubricants" and "polymer matting agents" are used interchangeably.

Without being bound by theory, it is believed that in some embodiments, the combination of a silicone acrylate and a polymer matting agent contributes to the improved stain resistance demonstrated by the coatings of the present invention. In some embodiments, the coating forms a hydrophobic surface which resists water based stains, captures less dirt and is easily cleaned or maintained using dry buffing.

In some embodiments, the wear layer comprises a silica matting agent in an amount from about 0 wt. % to about 15 wt. %. In some embodiments, the wear layer comprises from about 1 wt. % to about 6 wt. % of a silica matting agent.

In some embodiments the wear layer may also include at least one dispersing agent. In some embodiments, the dispersing agents comprise an acrylic block copolymer. Some embodiments provide a wear layer comprising from about 0.1 wt. % to about 1 wt. % of a dispersing agent, alternatively, the wear layer comprises from about 0.1 wt. % to about 0.5 wt. % of a dispersing agent.

Some embodiments provide a wear layer comprising a wetting agent. In some embodiments, the wetting agent includes, but is not limited to: a silicone or a silicone-free surfactant, a fluorocarbon surfactant and a combination thereof. In some embodiments, the wear layer comprises from about 0.01 wt.% to about 5 wt. % of a wetting agent, alternatively the wear layer comprises from about 0 wt. % to about 1 wt. % of a wetting agent.

In some embodiments, the wear layer comprises an antimicrobial agent. Some embodiments provide a wear layer comprising from about 0 wt. % to about 3 wt. % of an antimicrobial agent, alternatively from about 0.1 wt. % to about 1 wt. % of an antimicrobial agent.

In some embodiments, the substrate may be prepared by combining binder and filler and heating to melt mix the formulation ingredients. In some embodiments, the melt mixed formulation can then be formed into layers to create flooring structures using processing methods known in the art, including but not limited to calendaring, extruding, casting, consolidating, and laminating. In some embodiments, the PVC and other polymers may be mixed using high intensity, "extruder type" mixers to process the formulations into the substrate. Some embodiments provide that the substrate may be homogeneous, and filled or unfilled depending upon its location and function within the flooring structure. In other embodiments, the melt mixed formulation can be formed into pellets, chips, or particles, wherein the pellets, chips, or particles can be later utilized in a co-extrusion process to produce the core material. In some embodiments, the co-extrusion process utilizes two extruders commonly attached to a single die, although other known arrangements may be utilized by the present invention.

In some embodiments, the wear layer may be applied to the top surface of the substrate. In some embodiments, the wear layer cures and forms a coating that imparts improved stain resistance, improved scuff resistance, improved scratch resistance, and/or the ability to restore the floor using dry buffing maintenance, upon exposure to UV light.

The flooring system further includes an underlayment having an upper and lower surface, and positioned between the substrate and a subfloor. In some embodiments, the subfloor includes, but is not limited to, concrete, wood, plywood, or oriented strand board. In some embodiments, the underlayment has a thickness of from about 0.5 mm to about 5 mm, alternatively of from about 1 mm to about 3 mm, and alternatively about 1.5 mm.

In some embodiments, the underlayment may comprise one or more layers, including a performance enhancing layer. In some embodiments, the underlayment may include hydrophilic or hydrophobic material. In some embodiments, the underlayment includes lignocellulostic material and a polymeric material such as bamboo, cork, paraffin, foamed polyester, and a combination of two or more thereof. Some embodiments of the present invention provide an underlayment comprising bamboo and cork. Some embodiments provide that the bamboo and cork are assembled in alternating layers.

In some embodiments, the underlayment may be preassembled with the substrate. Some embodiments provide an adhesive applied to either the bottom surface of the substrate, the top surface of the underlayment, or both. In some embodiments, the top surface of the underlayment is pressed against the bottom surface of the substrate, thereby adhering the bottom surface of the substrate to the top surface of the underlayment prior to installation of the flooring system.

In other embodiments, the underlayment may be provided separately from the substrate. Some embodiments provide that the top surface of the underlayment is preglued with an adhesive and a release sheet is disposed over the adhesive, or the bottom surface of the substrate is preglued with an adhesive and a release sheet disposed over the adhesive. In some embodiments, the release sheet is a paper or a release film comprising a polymer or silicon coating. In some embodiments, the release sheet is removed from the preglued top surface of the underlayment at the time of installation of the flooring system and the preglued top surface of the underlayment is then contacted with the bottom surface of the substrate, thereby binding together the substrate and the underlayment. In some embodiments, the release sheet is removed from the preglued bottom surface of the substrate at the time of installation of the flooring system, and the preglued bottom surface of the substrate is contacted with the top surface of the underlayment, thereby binding together the substrate and the underlayment.

In some embodiments, the adhesive comprises a pressure sensitive adhesive. In some embodiments, the adhesive comprises an adhesive that creates a bond with the subfloor and the substrate by contact and pressure. Pressure sensitive adhesives can include those that are tacky and remain tacky, those that are tacky initially and harden after contact with the flooring material, and those that are non-tacky. Such adhesives include organic solvent-based, water-based, and hot melt adhesives. For example, organic solvent- and water-based adhesives include without limitation styrene butadiene rubber, styrene isoprene rubber, polyisobutylene rubber, styrene-isoprene-styrene ("SIS") and styrene-butadiene-styrene ("SBS") block copolymer rubbers, natural rubber, acrylic homopolymers and copolymers, vinyl acetate copolymers, polyesters, polyurethanes, and asphalt. Hot melt pressure sensitive adhesives include without limitation amorphous polypropylene, polyisobutylene, ethylene vinyl acetate, polyesters, ethylene acrylic acid copolymers, SIS and SBS block copolymer rubbers, and polyurethanes. Additionally, hot melt adhesives also include contact responsive materials such as those described in U.S. Pat. No. 5,888,335 to Kobe et al. These organic solvent-based, water-based, and hot melt adhesive polymers can be blended with a lower molecular weight tactifying resins, such as aliphatic and aromatic hydrocarbons or rosin esters.

In some embodiments, the adhesive comprises a two part system. In some embodiments, one part of the adhesive is coated onto the underlayment and the second part is coated onto the back of the surface covering such that when the second part on the surface covering is contacted with the first part on the underlayment, an adhesive chemical reaction occurs to chemically bond the surface covering to the underlayment. The adhesive layer can be a substantially uniform layer or non-continuous. For example, the adhesive can be coated onto the underlayment in the form of beads.

In some embodiments, one or more performance enhancing layers may be disposed between the substrate and the underlayment or between the underlayment and the subfloor to modify and/or enhance various properties of the flooring system. Some embodiments provide that performance enhancing layers include a solid or foamed polymer such as polyester.

In some embodiments of the present invention, the flooring system is installed by a locking means located on the substrate for adjoining the substrate to an adjacent substrate. In some embodiments, the locking means comprises a tongue and a groove or a push fit lock. Some tongue-and-groove wood flooring systems can be installed "floated," meaning that their installation does not require complicated nailing or gluing, so that they can be easily installed by consumers without hiring professional installers. Floated installation is possible due to the design of the tongue-and-groove interlocking joint system. Interlocking tongue-and-groove joint systems that enable floated installations of wood flooring are commonly called "click systems."

It is generally understood that "click system" refers to an interlocking joint system including two tongues and two grooves formed on four sides (edges) of a floorboard. And it's generally the case that floorboard long-side (longitudinal side) interlocking tongues/grooves and floorboard cross-side (butt-end side) interlocking tongues/grooves may have different shapes. Conventional click systems are designed to lock adjacent floorboards in position horizontally and vertically to prevent the adjacent floorboards from separating from each other horizontally and/or vertically after installation without any glue or nails. In addition, conventional click systems can be easily unlocked, which enables the user to uninstall the flooring and then reinstall it at a different location. Conventional click systems have various forms/types including but not limited to snap-lock systems, rotatable-lock systems, drop-lock systems, etc., any of which typically can be provided with or without separate locking elements.

In some embodiments, the core produces a substrate that not only has superior moisture-related dimensional stability but also temperature-related dimensional stability. Flooring systems that comprise only vinyl chloride homo-polymer will result in a core having a T_{g} value as high as 93°C (200°F). At ambient temperature, the core will be in the glassy state. The resulting flooring system will likely be stiff during regular indoor usage at room temperature. However, the present invention provides a binder composition that exhibits a T_{g} as low as 38°C (100°F). The resulting core is likely to be more flexible and well suited for indoor usage or cold weather settings.

In addition to having superior dimensional stability at lower temperatures, the present invention also provides a core that exhibits superior dimensional stability at higher temperatures. Flooring systems that use a core having a binder comprising only a vinyl chloride homo-polymer exhibit a coefficient of thermal expansion (CTE) of less than zero at a temperature of 82°C (180°F). As temperature increases, the core will rapidly shrink, thereby causing the floor system to contract and warp. However, the inventive compositions of the present invention provide a core having a CTE value of at least zero at 82°C (180°F), and will therefore not deform at higher temperatures. As a result, the flooring system of the present invention maintains dimensional stability at temperatures of at least 82°C (180°F), thereby providing a greater array of suitable flooring applications.

Moreover, in some embodiments, the increased flexibility provided by a lower T_{g} value does not undermine the dimensional stability because larger amounts of filler can be added to the core, thus ensuring proper mechanical stability in the core.

The invention will be described in greater detail by way of specific examples. The following examples are offered for illustrative purposes and are not intended to limit the invention in any manner. Those skilled in the art will readily recognize a variety of noncritical parameters, which can be changed or modified to yield essentially the same results.

### Examples

### Example 1

The compositions of exemplary flooring systems of the present invention are provided below in Table 1, and the compositions of comparative flooring systems are provided below in Table 2 (examples VII and X to XII are not according to the invention).

**Table 1**

| **Ingredients** | Ex. I | Ex. II | Ex. III | Ex. IV | Ex. V | Ex. VI | Ex. VII | Ex. VIII | Ex. IX | Ex. X | Ex. XI | Ex. XII |
|---|---|---|---|---|---|---|---|---|---|---|---|---|
| **Filler** | 50 | 50 | 50 | 67 | 67 | 68.2 | 75 | 75 | 75 | 80 | 80 | 80 |
| Limestone | 15 | 25 | 35 | 20 | 33 | 46.5 | 45 | 37 | 52 | 24 | 56 | 56 |
| Wood | 30 | 20 | 15 | 40 | 27 | 20.7 | 22 | 30 | 23 | 46 | 14 | 24 |
| Bamboo dust | 5 | 5 | -- | 7 | 7 | -- | 8 | 8 | -- | 10 | 10 | -- |
| **Binder** | 50 | 50 | 50 | 33 | 33 | 31.8 | 25 | 25 | 25 | 20 | 20 | 20 |
| Plasticizer | 7 | 9 | 11 | 3 | 5 | 8.1 | -- | 1 | 3 | -- | 4 | 4 |
| Polymer | 14 | 20 | 33 | 7 | 12 | 18 | 5 | 10 | 10 | 12 | 18 | 5 |
| PVC | 29 | 21 | 7 | 23 | 16 | 5.7 | 20 | 12 | 7 | 8 | 18 | 11 |
| **Underlayment (Y/N)** | Y | Y | N | Y | N | Y | Y | Y | N | Y | Y | N |

**Table 2**

| **Ingredients** | **Comp. Ex I** | **Comp Ex. II** | **Comp. Ex. III** | **Comp. Ex. IV** | **Comp. Ex V** | **Comp. Ex VI** | **Comp. Ex VII** | **Comp Ex. VIII** |
|---|---|---|---|---|---|---|---|---|
| **Filler** | 67 | 67 | 36.9 | 33 | 25 | 25 | 20 | 20 |
| Limestone | 67 | 34 | 18.4 | 15 | 12 | 10 | 10 | 8 |
| Wood | -- | 25 | 11.3 | 15 | 13 | 10 | 10 | 8 |
| Bamboo dust | -- | 7 | 7.2 | 3 | -- | 5 | -- | 4 |
| **Binder** | 33 | 33 | 63.1 | 67 | 75 | 75 | 80 | 80 |
| Plasticizer | -- | -- | 9.5 | 9 | -- | 10 | -- | -- |
| Polymer | 10 | -- | -- | -- | -- | -- | -- | 24 |
| PVC | 23 | 33 | 53.6 | 54 | 75 | 65 | 80 | 80 |
| **Underlayment (Y/N)** | N | N | Y | Y | Y | Y | Y | Y |

### Example 2

Table 3 (below) describes data generated from a thermal stability evaluation of an exemplary substrate of the present invention and a comparative substrate. Dimensions of the substrates are measured in machine direction. Substrates are then exposed to a temperature of about 180 deg. C for about six hours. The machine direction dimensions post-treatment are then measured. Substrates that have suitable thermal stability demonstrate a machine direction dimension change of less than or equal to 0.1%. The data described in Table 3 demonstrates that substrates of the present invention having the inventive binder to filler ratio, provide a suitable level of dimensional stability; while comparative substrates which do not possess the inventive binder to filler ratio, do not provide a suitable level of dimensional stability.

**Table 3**

| Percent Change in Dimension | |
|---|---|
| Ex. VI | Comp. Ex. II |
| ≤ 0.1% | 2.6% |

### Example 3

Exemplary substrates of the present invention and comparative substrates are evaluated in a 3-point bend test, to calculate the flexural modulus thereof. The higher the flexural modulus, the stiffer the substrate. During the 3-point bend test, pressure is applied a 15 cm (six inch) span of a substrate using an Instron tester at a cross-head speed of 12.7 mm/minute (0.5 inches/minute). As the pressure is applied, the substrate is exposed to increasing temperatures and flexural modulus is calculated at specific temperatures.

The results of the 3-point bend test further demonstrate the unexpected dimensional stability provided by the inventive substrates of the present invention. Specifically, exemplary substrates of the present invention became more flexible during the test, while comparative substrates became so brittle that 50% of them broke.

As those skilled in the art will appreciate, numerous changes and modifications may be made to the embodiments described herein, without departing from the invention. It is intended that all such variations fall within the scope of the invention.

## Claims

1. A flooring system comprising:
a subfloor; and
a flooring product positioned adjacent the subfloor, the flooring product comprising:
a substrate comprising a core, the core comprising a melt-mixed mixture of:
a binder comprising a polymer and a plasticizer, the polymer having a T_{g} of from 32°C (90°F) to 66°C (150°F) and selected from polyethylene terephthalate; a vinyl chloride homo-polymer, a co-polymer or a terpolymer of vinyl chloride;
acrylo-butadiene styrene; polypropylene;
polyethylene; a polyester; an acrylate; and a combination of two or more thereof, and the plasticizer present in an amount ranging from 1 wt.% to 12 wt. % based on the total weight of the core; and
a filler comprising a material selected from limestone, clay, talc, or a combination thereof;
an underlayment between the substrate and the subfloor;
wherein the binder and filler are present in a weight ratio of from 1:1 to 1:3.

2. The system of claim 1, wherein the plasticizer is selected from butyl benzene phthalate; diisononyl phthalate; dioctyl terephthalate; diisononyl cyclohexane; a benzoate; and a combination of two or more thereof.

3. The system of any foregoing claim, wherein the filler further comprises a material selected from a lignocellulostic component, bamboo, and a combination of two or more thereof.

4. The system of any foregoing claim, wherein the filler comprises a lignocellulostic component and bamboo, optionally wherein the lignocellulostic component is selected from cork, oak, hardwood, eucalyptus, acacia, birch, palm wood, rubber wood, mulberry wood, Forest Stewardship Council certified wood species, coir, jute, seagrass and straw; and a combination of two or more thereof.

5. The system of any foregoing claim, wherein the core comprises alternating layers of bamboo and a lignocellulostic component, or alternating layers of bamboo and cork.

6. The system of any foregoing claim, wherein the polymer has a T_{g} of from 38°C (100°F) to 66°C (150°F).

7. The system of any foregoing claim, wherein the underlayment comprises a hydrophobic material, optionally wherein the hydrophobic material is selected from: cork, paraffin, and a combination thereof.

8. The system of any foregoing claim, wherein the substrate has a top surface that is coated with a wear layer, optionally wherein the wear layer comprises a wear resistant particle selected from aluminum oxide, silica, and a combination thereof.

9. The system of any foregoing claim, wherein the core comprises from 20 wt. % to 40 wt. % of a binder.

10. The system of any foregoing claim, wherein the core comprises from 60 wt. % to 80 wt. % of filler.

11. The system of any foregoing claim, wherein the substrate further comprises a locking means for adjoining said substrate to an adjacent substrate, the locking means selected from the group of a tongue and a groove lock and a push fit lock.

12. The system of any foregoing claim, wherein the core has a thickness of from 2 mm to 15 mm.

13. The system of any foregoing claim, wherein the core comprises from 10 wt. % to 40 wt. % of a polymer.

14. A flooring product comprising a substrate comprising a core, the core comprising a melt-mixed mixture of:
a binder comprising a polymer and a plasticizer, the polymer having a T_{g} of from 32°C (90°F) to 66°C (150°F) and selected from polyethylene terephthalate; a vinyl chloride; homo-polymer, a co-polymer or a terpolymer of vinyl chloride;
acrylo-butadiene styrene; polypropylene; polyethylene; a polyester; an acrylate; and a combination of two or more thereof, and the plasticizer present in an amount ranging from 1 wt.% to 12 wt. % based on the total weight of the core; and
a filler comprising a material selected from limestone, clay, talc, or a combination thereof;
wherein the binder and filler are present in a weight ratio of from 1:1 to about 1:3.

## Patentansprüche

1. Fußbodensystem, das Folgendes umfasst:
einen Unterboden; und
ein neben dem Unterboden positioniertes Bodenbelagsprodukt, wobei das Bodenbelagsprodukt Folgendes umfasst:
ein Substrat mit einem Kern, wobei der Kern ein schmelzgemischtes Gemisch umfasst aus:
einem Bindemittel, das ein Polymer und einen Weichmacher umfasst, wobei das Polymer einen T_{g}-Wert von 32°C (90°F) bis 66°C (150°F) hat und aus Polyethylenterephthalat; einem Vinylchlorid-Homopolymer, einem Copolymer oder einem Terpolymer von Vinylchlorid; Acryl-Butadien-Styrol; Polypropylen; Polyethylen; einem Polyester; einem Acrylat; und einer Kombination aus zwei oder mehr davon ausgewählt ist, und der Weichmacher in einer Menge im Bereich von 1 Gew.-% bis 12 Gew.-% auf der Basis des Gesamtgewichts des Kerns vorliegt; und
einem Füllmittel, umfassend ein Material ausgewählt aus Kalkstein, Ton, Talk oder einer Kombination davon;
eine Unterlage zwischen dem Substrat und dem Unterboden;
wobei Bindemittel und Füllmittel in einem Gew.-Verhältnis von 1:1 bis 1:3 vorliegen.

2. System nach Anspruch 1, wobei der Weichmacher aus Butylbenzolphthalat; Diisononylphthalat; Dioctylterephthalat; Diisononylcyclohexan; einem Benzoat; und einer Kombination aus zwei oder mehr davon ausgewählt ist.

3. System nach einem vorherigen Anspruch, wobei das Füllmittel ein Material umfasst, das aus einer Lignozellulose-Komponente, Bambus und einer Kombination aus zwei oder mehr davon ausgewählt ist.

4. System nach einem vorherigen Anspruch, wobei das Füllmittel eine Lignozellulose-Komponente und Bambus umfasst, wobei die Lignozellulose-Komponente optional ausgewählt ist aus Kork, Eiche, Hartholz, Eukalyptus, Akazie, Birke, Palmenholz, Kautschukholz, Maulbeerholz, vom Forest Stewardship Council zertifizierten Holzarten, Kokos, Jute, Seegras und Stroh; und einer Kombination aus zwei oder mehr davon.

5. System nach einem vorherigen Anspruch, wobei der Kern abwechselnde Schichten aus Bambus und einer Lignozellulose-Komponente oder abwechselnde Schichten aus Bambus und Kork umfasst.

6. System nach einem vorherigen Anspruch, wobei das Polymer einen T_{g}-Wert von 38°C (100°F) bis 66°C (150°F) hat.

7. System nach einem vorherigen Anspruch, wobei die Unterlage ein hydrophobes Material umfasst, wobei das hydrophobe Material optional aus Kork, Paraffin und einer Kombination davon ausgewählt ist.

8. System nach einem vorherigen Anspruch, wobei das Substrat eine Oberseite hat, die mit einer Verschleißschicht überzogen ist, wobei die Verschleißschicht optional einen verschleißbeständigen Partikel umfasst, ausgewählt aus Aluminiumoxid, Siliciumoxid und einer Kombination davon.

9. System nach einem vorherigen Anspruch, wobei der Kern 20 Gew.-% bis 40 Gew.-% eines Bindemittels umfasst.

10. System nach einem vorherigen Anspruch, wobei der Kern 60 Gew.-% bis 80 Gew.-% Füllmittel umfasst.

11. System nach einem vorherigen Anspruch, wobei das Substrat ferner ein Verriegelungsmittel zum Fügen des genannten Substrats an ein benachbartes Substrat umfasst, wobei das Verriegelungsmittel aus der Gruppe bestehend aus einer Nut-und-Feder-Verriegelung und einer Einrastverriegelung ausgewählt ist.

12. System nach einem vorherigen Anspruch, wobei der Kern eine Dicke von 2 mm bis 15 mm hat.

13. System nach einem vorherigen Anspruch, wobei der Kern 10 Gew.-% bis 40 Gew.-% eines Polymers umfasst.

14. Bodenbelagsprodukt, das ein Substrat mit einem Kern umfasst, wobei der Kern ein schmelzgemischtes Gemisch umfasst aus:
einem Bindemittel, das ein Polymer und einen Weichmacher umfasst, wobei das Polymer einen T_{g}-Wert von 32°C (90°F) bis 66°C (150°F) hat und aus Polyethylenterephthalat; einem Vinylchlorid-Homopolymer, einem Copolymer oder einem Terpolymer von Vinylchlorid; Acryl-Butadien-Styrol; Polypropylen; Polyethylen; einem Polyester; einem Acrylat; und einer Kombination aus zwei oder mehr davon ausgewählt ist, und der Weichmacher in einer Menge im Bereich von 1 Gew.-% bis 12 Gew.-% auf der Basis des Gesamtgewichts des Kerns vorliegt; und
einem Füllmittel, umfassend ein Material ausgewählt aus Kalkstein, Ton, Talk oder einer Kombination davon;
wobei Bindemittel und Füllmittel in einem Gew.-Verhältnis von 1:1 bis 1:3 vorliegen.

## Revendications

1. Un système de revêtement de sol comprenant :
un sous-plancher ; et
un produit de revêtement de sol positionné adjacent au sous-plancher, le produit de revêtement de sol comprenant :
un substrat comprenant une partie centrale, la partie centrale comprenant un mélange mélangé par fusion de :
un liant comprenant un polymère et un plastifiant, le polymère ayant une T_{g} comprise entre 32°C (90°F) et 66°C (150°F) et sélectionné parmi le téréphtalate de polyéthylène ; un homopolymère de chlorure de vinyle, un copolymère ou un terpolymère de chlorure de vinyle ; un acrylo-butadiène styrène ; un polypropylène ; un polyéthylène ; un polyester ; un acrylate ; et une combinaison de deux ou plus de deux de ces derniers, et le plastifiant étant présent dans une quantité comprise entre 1 % en poids et 12 % en poids sur la base du poids total de la partie centrale ; et
une charge de remplissage comprenant un matériau sélectionné parmi le calcaire, l'argile, le talc, ou une combinaison de ces derniers ;
une sous-couche entre le substrat et le sous-plancher ;
dans lequel le liant et la charge de remplissage sont présents dans un rapport de poids compris entre 1:1 et 1:3.

2. Le système selon la revendication 1, dans lequel le plastifiant est sélectionné parmi le butyle benzène phtalate ; le phtalate de diisononyle ; le téréphtalate de dioctyle ; le cyclohexane de diisononyle ; un benzoate ; et une combinaison de deux ou plus de deux de ces derniers.

3. Le système selon l'une quelconque des revendications précédentes, dans lequel la charge de remplissage comprend en outre un matériau sélectionné parmi un composant lignocellulosique, un bambou, et une combinaison de deux ou plus de deux de ces derniers.

4. Le système selon l'une quelconque des revendications précédentes, dans lequel la charge de remplissage comprend un composant lignocellulosique et un bambou, en option dans lequel le composant lignocellulosique est sélectionné parmi le liège, le chêne, un bois dur, l'eucalyptus, l'acacia, le bouleau, le bois de palmier, le bois d'hévéa, le bois de mûrier, des espèces de bois certifiées par le Forest Stewardship Council, le coir, le jute, les algues et la paille ; et une combinaison de deux ou plus de deux de ces derniers.

5. Le système selon l'une quelconque des revendications précédentes, dans lequel la partie centrale comprend des couches alternées de bambou et d'un composant lignocellulosique, ou des couches alternées de bambou et de liège.

6. Le système selon l'une quelconque des revendications précédentes, dans lequel le polymère a une T_{g} comprise entre 38°C (100°F) et 66°C (150°F).

7. Le système selon l'une quelconque des revendications précédentes, dans lequel la sous-couche comprend un matériau hydrophobe, en option dans lequel le matériau hydrophobe est sélectionné parmi : le liège, la paraffine, et une combinaison de ces derniers.

8. Le système selon l'une quelconque des revendications précédentes, dans lequel le substrat a une surface supérieure qui est revêtue d'une couche d'usure, en option dans lequel la couche d'usure comprend une particule résistant à l'usure sélectionnée parmi l'oxyde d'aluminium, la silice, et une combinaison de ces derniers.

9. Le système selon l'une quelconque des revendications précédentes, dans lequel la partie centrale comprend entre 20 % en poids et 40 % en poids d'un liant.

10. Le système selon l'une quelconque des revendications précédentes, dans lequel la partie centrale comprend entre 60 % en poids et 80 % en poids de charge de remplissage.

11. Le système selon l'une quelconque des revendications précédentes, dans lequel le substrat comprend en outre un moyen de verrouillage pour assembler ledit substrat à un substrat adjacent, le moyen de verrouillage étant sélectionné dans le groupe d'un verrouillage à rainure et languette et d'un verrouillage à ajustement correct.

12. Le système selon l'une quelconque des revendications précédentes, dans lequel la partie centrale a une épaisseur comprise entre 2 mm et 15 mm.

13. Le système selon l'une quelconque des revendications précédentes, dans lequel la partie centrale comprend entre 10 % en poids et 40 % en poids d'un polymère.

14. Un produit de revêtement de sol comprenant un substrat comprenant une partie centrale, la partie centrale comprenant un mélange mélangé par fusion de :
un liant comprenant un polymère et un plastifiant, le polymère ayant une T_{g} comprise entre 32°C (90°F) et 66°C (150°F) et sélectionné parmi un téréphtalate de polyéthylène ; un chlorure de vinyle ; un homopolymère, un copolymère ou un terpolymère de chlorure de vinyle ; un acrylo-butadiène styrène ; un polypropylène ; un polyéthylène ; un polyester ; un acrylate ; et une combinaison de deux ou plus de deux de ces derniers, et le plastifiant étant présent dans une quantité comprise entre 1 % en poids et 12 % en poids sur la base du poids total de la partie centrale ; et
une charge de remplissage comprenant un matériau sélectionné parmi le calcaire, l'argile, le talc, ou une combinaison de ces derniers ;
dans lequel le liant et la charge de remplissage sont présents dans un rapport de poids compris entre 1:1 et environ 1:3.
